# EUROPEAN PATENT SPECIFICATION

(11) **EP 3 722 632 B1**
(45) Date of publication and mention of the grant of the patent: **07.09.2022**
(21) Application number: 18906451.2
(22) Date of filing: 19.11.2018
(51) Int. Cl.: F16D 25/0632, F16D 25/10

(54) **FRICTION CLUTCH**
REIBUNGSKUPPLUNG
EMBRAYAGE À FRICTION

(30) Priority: 15.02.2018 JP 2018024990
(43) Date of publication of application: 14.10.2020
(73) Proprietor: Dynax Corporation, Chitose-shi Hokkaido 066-8585 (JP)
(72) Inventor: AKIMOTO, Kenichi, Chitose-shi Hokkaido 066-8585 (JP)
(74) Representative: Tomkins & Co
(86) International application number: PCT/JP2018/042591
(87) International publication number: WO 2019/159461

(56) References cited:
- DE-A1- 19 833 397
- JP-A- S6 023 628
- JP-A- 2010 002 028
- JP-Y1- S3 011 717
- US-A- 2 393 398
- US-A1- 2004 020 740
- US-A1- 2018 038 420

## Description

### [FIELD OF THE INVENTION]

The present invention relates to a friction clutch used such as for an automatic transmission.

### [BACKGROUND ART]

Some friction clutches for transmitting torque between a clutch drum and a hub, which are disposed on the same axis to be relatively rotatable to each other, frictionally engage a plate mounted to either the clutch drum or the hub and a friction plate mounted to the other. To increase the capacity of torque to be transmitted further in this type of friction clutch, it has been proposed to increase the hydraulic pressure for operating the piston to improve the close contact made between the plate and the friction plate, increase the area pressed by the piston, or increase the number of plates and friction plates.

The friction clutch is, however, also required to be downsized. Therefore, the improvement with increasing the size of the friction clutch as mentioned above is not desired. That is, a friction clutch which not only is compact and has a larger transmission torque capacity, but also is capable of inhibiting a drag torque is required. The following is an example of the friction clutches which have attempted to solve the above problems.

Patent documents: US 2004/020740 A1 and US 2 393 398 A, disclose friction clutches showing the preamble of claim 1.

### [Prior Art Document]

### [Patent document]

[Patent Document 1] Japanese Unexamined Patent Publication No. 2017-20654

Patent Document 1 discloses a shifting device for a motor vehicle transmission combining a friction clutch, in which a plate and a friction plate frictionally engage, with a cone clutch and a dog clutch. According to the shifting device disclosed in the document 1, a piston operates to frictionally engage conical surfaces of the cone clutch with each other, and to engage teeth of the dog clutch with each other. And then, the plate and the friction plate are brought into close contact with each other by the piston. With this configuration, the transmission torque capacity can be larger, and the drag torque can be inhibited.

The friction clutch is also, however, required to have a desirable response to the event of the clutch and torque transmission interlocking under hydraulic control; such as reducing the shock. In this regard, in the friction clutch of Patent Document 1, the shock may occur since the torque is suddenly transmitted during frictional engagement of the cone clutch. In addition, drag torque may occur when the hydraulic pressure is released since the cone clutch, which should release from the friction engagement, can become stuck so that the friction engagement state continues when it is intended to be released from said engagement.

### [SUMMARY OF INVENTION]

### [Problems to be Solved by Invention]

In view of the above-mentioned problems of the prior art, the present invention provides a friction clutch which is compact, has a larger transmission torque capacity, reduces shock in engaging the clutch, and inhibits a drag torque from occurring.

### [Means for Solving the Problems]

The present invention has solved the above-mentioned problems by a friction clutch comprising;
a cylindrical clutch drum which is rotatably provided with
an inner peripheral surface spline;
a hub which is coaxial with the clutch drum and is provided on an inner peripheral side of the clutch drum so as to be relatively rotatable;
a pusher plate and a driven plate which are fitted into the inner peripheral surface spline respectively;
an input cone which is provided on the clutch drum;
an elastic body which is located between the driven plate and the input cone;
a piston which is provided on an inner peripheral side of the clutch drum to move forward and backward in an axial direction and to press the pusher plate toward the driven plate;
an output cone which is connected to the hub; and a friction plate which is assembled with the output cone and disposed between the pusher plate and the driven plate; wherein the pusher plate, the driven plate and the input cone are arranged in said order in the axial direction; wherein the pusher plate, the friction plate and the driven plate are frictionally engaged with each other and the elastic body is compressed when the piston moves toward the pusher plate to press the pusher plate;
wherein the input cone and the output cone are frictionally engaged with each other when the piston moves further toward the pusher plate such that the output cone moves toward the input cone.

### [The effect of invention]

According to the present invention, a piston operates at a comparatively low hydraulic pressure to press a pusher plate to frictionally engage the pusher plate, a friction plate and a driven plate with each other which compresses an elastic body. An initial shock in frictionally engaging the pusher plate, the friction plate, and the driven plate can be reduced due to the elastic body being compressed. Furthermore, the piston operates at a comparatively high hydraulic pressure to further compress the elastic body so that an output cone moves toward an input cone to frictionally engage an input cone and an output cone with each other. In this way, it is possible to increase the transmission torque capacity by transmitting torque through the cone clutch composed of the input cone and the output cone. Therefore, the number of friction plates and driven plates can be reduced, and the piston can be downsized. Accordingly, the friction clutch can be made compact. Furthermore, since the hydraulic pressure of the hydraulic oil required to operate the piston can be set to be lower than that of the known friction clutches, fuel consumption is improved. Additionally, when the hydraulic pressure is released, the compressed elastic body operates to push the input cone and the output cone in a direction for separating from each other so that the cone clutch becomes less likely to be stuck. Therefore, the drag torque can be reduced.

In addition, when the friction clutch further comprises a second input cone which is fitted into an inner peripheral surface spline, one conical surface of which frictionally engages with the opposite surface to the surface of the output cone with which the input cone frictionally engages, the torque can be transmitted through two frictional engagements with the conical surfaces to increase the transmission torque capacity of the friction clutch further.

Furthermore, the hub can include a flexible portion which elastically deforms by being pressed by the output cone when the output cone moves toward the input cone. In this case, when the hydraulic pressure is released, the elastically deformed deflective portion operates to push back the output cone away from the input cone, so that the cone clutch becomes much less likely to be stuck.

Furthermore, the friction clutch can include a third input cone, one surface of which frictionally engages with the opposite surface to the surface of the output cone with which the input cone frictionally engages, the hub can interlock with the output cone and can be connected with a second output cone, one surface of which frictionally engages with the opposite surface to the surface of the third input cone with which the output cone frictionally engages. With this configuration, the torque can be transmitted utilizing three frictional engagements with the conical surfaces to further increase the transmission torque capacity.

Furthermore, the hub can include a flexible portion which elastically deforms by being pressed by the output cone when the second output cone moves toward the input cone. With this configuration, when the hydraulic pressure is released, the elastically deformed deflective portion operates to push back the output cone and the second output cone away from the input cone and the third input cone respectively, so that the cone clutch becomes much less likely to be stuck.

### [BRIEF DESCRIPTION OF DRAWINGS]

FIG. 1 is a cross-sectional view taken along an axis of an upper half of a friction clutch according to a first embodiment of the present invention when the hydraulic pressure is released.
Fig. 2 is a cross-sectional view taken along the axis of the upper half of the friction clutch of Fig. 1 with being at a comparatively low hydraulic pressure.
FIG. 3 is a cross-sectional view taken along the axis of the upper half of the friction clutch of FIG. 1 with being at a comparatively high hydraulic pressure.
FIG. 4 is a cross-sectional view taken along an axis of an upper half of a friction clutch according to a second embodiment of the present invention when the hydraulic pressure is released.
FIG. 5 is a cross-sectional view taken along an axis of an upper half of a friction clutch according to a third embodiment of the present invention when the hydraulic pressure is released.

### [DESCRIPTION OF EMBODIMENTS]

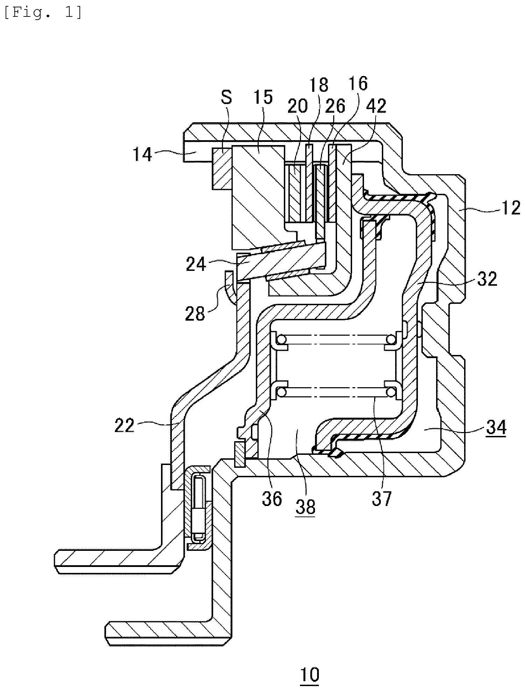

Some embodiments of the present invention will be described with reference to Figs. 1 - 5. The present invention is not however limited to these embodiments.

FIG. 1 shows a state of the friction clutch 10 according to the first embodiment of the present invention when the hydraulic pressure is not applied. The friction clutch 10 is rotatable and includes a cylindrical clutch drum 12 having an inner peripheral surface spline 14 and a hub 22. The hub 22 is provided on the inner peripheral side of the clutch drum 12 so as to be coaxial with the clutch drum 12 and relatively rotatable to the clutch drum 12. A drive shaft of the clutch drum 12 and the hub 22 is not shown. Since the friction clutch 10 has a substantially symmetrical structure with respect to the drive shaft, FIGS. 1 to 5 show the upper half of the drive shaft.

A pusher plate 16 and a driven plate 18 are fitted into the inner peripheral surface spline 14 of the clutch drum 12. Furthermore, the clutch drum 12 is provided with an input cone 15. The input cone 15 is disposed to be fitted into the inner peripheral surface spline 14 and retained by the snap ring S. The pusher plate 16, the driven plate 18, and the input cone 15 rotate together with the clutch drum 12, and the pusher plate 16, the driven plate 18, and the input cone 15 are arranged in said order in the axial direction.

An elastic body 20 is disposed between the driven plate 18 and the input cone 15. The elastic body 20 is an annular wave spring, but any elastic body which can be disposed between the driven plate 18 and the input cone 15 may be used instead of the wave spring.

A piston 32 is provided on the inner peripheral side of the clutch drum 12. The piston 32 is configured to move toward the pusher plate 16 by the hydraulic pressure which is generated by supplying the hydraulic oil from an oil passage (not shown) to a hydraulic chamber 34 provided between the piston 32 and the clutch drum 12. A canceller 36 is provided on the side of the piston 32 facing towards the pusher plate 16. A return spring 37 is provided between the piston 32 and the canceller 36. Therefore, when the piston 32 moves toward the pusher plate 16 by the hydraulic pressure, the return spring 37 is compressed. When the hydraulic pressure is released, the return spring 37 pushes the piston 32 back. Thus, the piston 32 is provided so as to be movable forward and backward in the axial direction. Alternatively, a space between the piston 32 and the canceller 36 may be used as a hydraulic canceller chamber 38 so that the hydraulic oil is supplied to the hydraulic canceller chamber 38 to push the piston 32 back.

An output cone 24 is connected to the hub 22. The output cone 24 is assembled with a friction plate 26 disposed between the pusher plate 16 and the driven plate 18. The output cone 24 and the friction plate 26 can be integrated. The output cone 24 is also axially movable with respect to the hub 22. A friction material can be attached to either one of the conical surfaces of the input cone 15 or the output cone 24 which are frictionally engaged with each other. The same applies to a second input cone 42, a third input cone 44b, and a second output cone 46b, which will be described below.

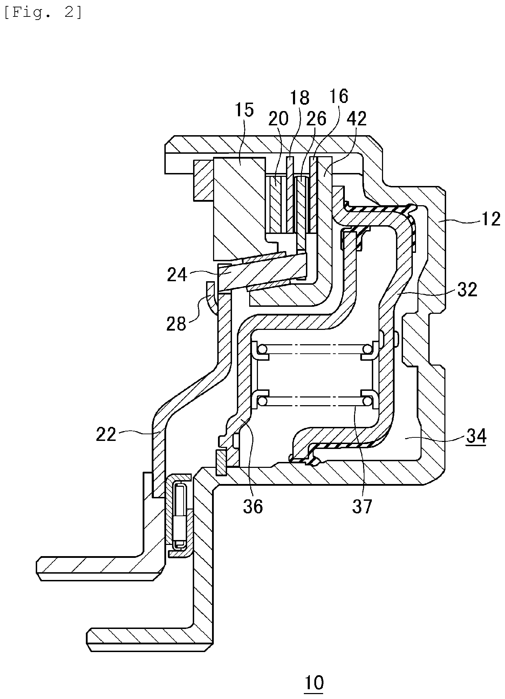

The operation of the friction clutch 10 will be described below. As shown in FIG. 2, when the hydraulic oil is supplied to the hydraulic chamber 34, the piston 32 moves toward the pusher plate 16 to press the pusher plate 16 toward the driven plate 18 through the second input cone 42. At this time, the return spring 37 provided between the piston 32 and the canceller 26 also begins to be compressed. The second input cone 42 will be described in detail below.

When the piston 32 operates at a comparatively low hydraulic pressure, the piston 32 presses the pusher plate 16 to frictionally engage the pusher plate 16, the friction plate 26, and the driven plate 18 and to compress the elastic body 20. Accordingly, in the friction clutch 10, a torque of the clutch drum 12 is transmitted to the hub 22 through a disc clutch including the pusher plate 16, the friction plate 26, and the driven plate 18 by operation of the piston 32. When the pusher plate 16, the friction plate 26, and the driven plate 18 are frictionally engaged with each other, the elastic body 20 is compressed so that an initial shock in frictionally engaging the pusher plate 16, the friction plate 26, and the driven plate 18 is reduced.

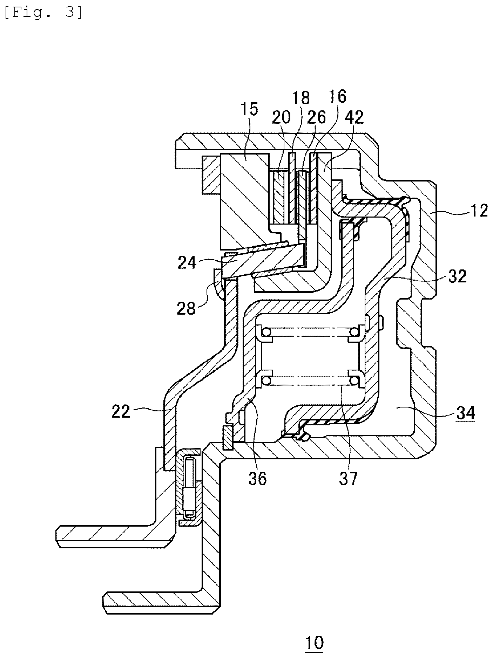

As shown in FIG. 3, when a comparatively low hydraulic pressure state is shifted to a comparatively high hydraulic pressure state, the piston 32 further presses the pusher plate 16. Then, the elastic body 20 is further compressed and the output cone 24 moves toward the input cone 15. Furthermore, the input cone 15 and the output cone 24 are frictionally engaged to transmit the torque through the cone clutch including the input cone 15 and the output cone 24. With this configuration, since the capacity of the transmission torque of the friction clutch 10 can be increased, the number of the friction plates 26 and the driven plates 18 can be reduced to allow the piston 32 to be downsized. In the present embodiment, there is one friction plate 26 and one driven plate 18. Therefore, the friction clutch 10 can be made relatively compact. In addition, since the hydraulic pressure of the hydraulic oil required for the operation of the piston 32 can be set comparatively low, fuel consumption is improved. The number of friction plates 26 and driven plates 18 can also be increased for the purpose of improving heat resistance.

Furthermore, the friction clutch 10 includes a second input cone 42, which fits into the inner peripheral surface spline 14 of the clutch drum 12, between the pusher plate 16 and the piston 32. When the piston 32 operates at a comparatively high hydraulic pressure, it is configured that the second input cone 42 engages with the opposite surface to the surface of the output cone 24 with which the input cone 15 frictionally engages. According to the clutch 10, the torque can be transmitted through two frictional engagements with the conical surfaces of the input cone 15 and the output cone 24 and the conical surfaces of the second input cone 42 and the output cone 24 to increase the transmission torque capacity further. The second input cone 42 may be formed integrally with the pusher plate 16.

When the hydraulic pressure is released from the state shown in FIG. 3, the piston 32 is pushed back by the compressed return spring 37. Similarly, the compressed elastic body 20 operates so as to push the input cone 15, the driven plate 18, the friction plate 26, and the output cone 24 in the direction for separating from each other. Furthermore, the pusher plate 16 and the output cone 24 are pushed back toward the piston 32. As a result, the frictional engagement between the cone clutch and the disc clutch is released. Accordingly, in the friction clutch 10, the elastic body 20 pushes the input cone 15 and the output cone 24 in the direction for separating from each other so that the cone clutch becomes much less likely to be stuck and good responsiveness can be achieved.

Furthermore, the hub 22 of the friction clutch 10 can be configured to include a flexible portion 28. The flexible portion 28 is configured to be elastically deformed by being pressed by the output cone 24 when the output cone 24 moves in the direction for frictional engagement with the input cone 15. According to this configuration, when the hydraulic pressure is released, the flexible portion 28 operates to push back the output cone 24 in the direction for separating from the input cone 15 so that the cone clutch becomes much less likely to be stuck.

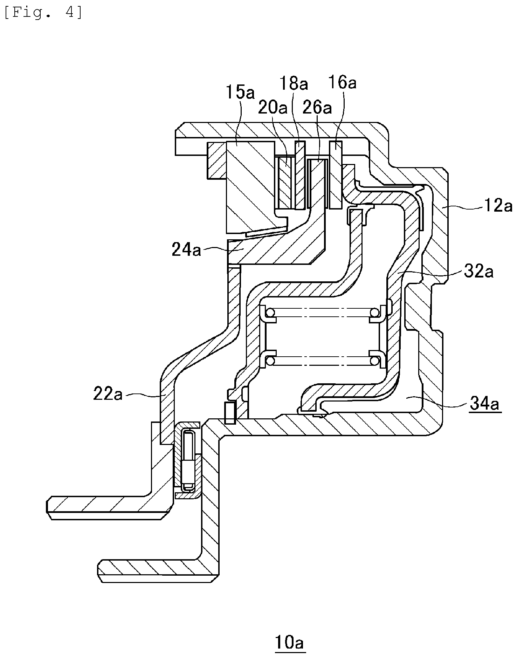

FIG. 4 shows a friction clutch 10a according to a second embodiment of the present invention, which has a cone clutch that transmits the torque through one frictional engagement with conical surfaces. The friction clutch 10a basically has the same configuration as the friction clutch 10. The friction clutch 10a, however, does not include the second output cone 42 (see FIG. 1) which is different to the friction clutch 10. According to the present invention, such a simple configuration can be also realized.

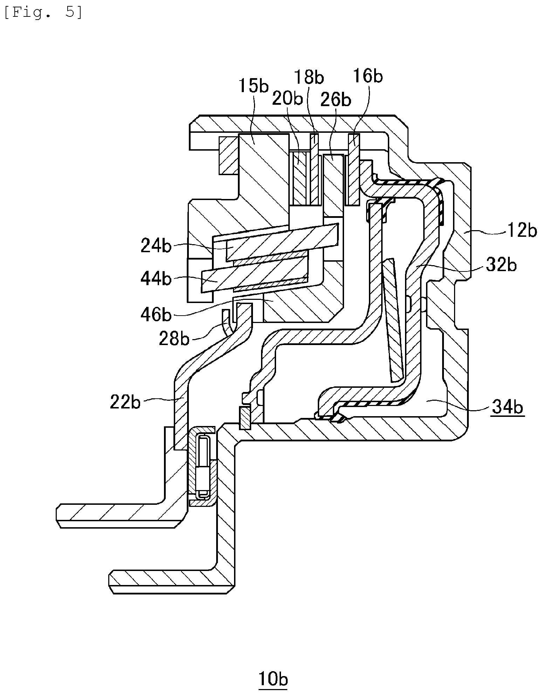

FIG. 5 shows a friction clutch 10b according to a third embodiment of the present invention, which has a cone clutch that transmits torque through three frictional engagements with conical surfaces. The friction clutch 10b basically has the same configuration as the friction clutch 10, but there are some different features as follows.

The friction clutch 10b includes a third input cone 44b. Third input cone 44b frictionally engages with the opposite surface to the surface of the output cone 24b with which the input cone 15b frictionally engages. The hub 22b interlocks with the output cone 24b and is connected with a second output cone 46b. The second output cone 46b frictionally engages with the opposite surface to the surface of the third input cone 44b with which the output cone 24b frictionally engages. In the friction clutch 10b, the second output cone 46b and the friction plate 26b are integrated, and the output cone 24b is assembled to the second output cone 46b. As a result, the output cone 24b is connected to the hub 22b.

According to the friction clutch 10b, when the piston 32b operates at a comparatively high hydraulic pressure, the torque can be transmitted through the three frictional engagements with the conical surfaces of the input cone 15b and the output cone 24b, the conical surfaces of the output cone 24b and the third input cone 44b, and the conical surfaces of the third input cone 44b and the second output cone 46b to increase the transmission torque capacity further.

In the case of the friction clutch 10b, the hub 22b can include a flexible portion 28b which is elastically deformed by being pressed by the second output cone 46b when the second output cone 46b moves toward the input cone 15b. The operation of the flexible portion 28b is the same as that of the flexible portion 28 of the friction clutch 10. Thus, the description thereof is omitted.

In the friction clutches 10 - 10b described above, the friction material segment is attached to the surfaces of the friction plates 26 - 26b facing the pusher plates 16 - 16b and the driven plates 18 - 18b. Alternatively, a friction material segment can be attached to the surfaces of the pusher plates 16 - 16b and the driven plates 18 - 18b facing the friction plates 26 - 26b respectively.

As described above, according to the present invention, it is possible to provide a friction clutch which is compact, has a larger transmission torque capacity, reduces shock when engaging the clutch, and inhibits a drag torque from occurring.

### [EXPLANATION OF REFERENCES]

10-10b clutch
12-12b clutch drum
14 inner peripheral surface spline
15 ~ 15b input cone
16 ~ 16b pusher plate
18-18b driven plate
20 ~ 20b elastic body
22-22b hub
24-24b output cone
26-26b friction plate
28, 28b flexible portion
32-32b piston
42 second input cone
44 third input cone
46b second output cone

## Claims

1. A friction clutch (10) comprising;
a cylindrical clutch drum (12) which is rotatably provided with an inner peripheral surface spline (14);
a hub (22) which is coaxial with the clutch drum (12, 12a, 12b) and is provided on an inner peripheral side of the clutch drum (12) so as to be relatively rotatable;
a pusher plate (16) and a driven plate (18) which are fitted into the inner peripheral surface spline (14) respectively;
an input cone (15) which is provided on the clutch drum (12);
an elastic body (20) which is located between the driven plate (18) and the input cone (15);
a piston (32) which is provided on an inner peripheral side of the clutch drum (12) to move forward and backward in an axial direction and to press the pusher plate (16) toward the driven plate (18);
an output cone (24) which is connected to the hub (22); and
a friction plate (26) which is assembled with the output cone (24) and disposed between the pusher plate (16) and the driven plate (18);
**characterized in that** the pusher plate (16), the driven plate (18) and the input cone (15) are arranged in said order in the axial direction;
the pusher plate(16), the friction plate (26) and the driven plate (18) are frictionally engaged with each other and the elastic body (20) is compressed when the piston (32) moves toward the pusher plate (16) to press the pusher plate (16); and
the input cone (15) and the output cone (24) are frictionally engaged with each other when the piston (32) moves further toward the pusher plate (16) such that the output cone (24) moves toward the input cone (15).

2. The friction clutch (10) of claim 1, further comprising a second input cone (42) which is fitted into the inner peripheral surface spline (14) and frictionally engages with an opposite surface to a surface of the output cone (24) with which the input cone (15) frictionally engages.

3. The friction clutch (10) of claim 1 or 2, wherein the hub (22) includes a flexible portion (28) that is elastically deformed by being pressed by the output cone (24) when the output cone (24) moves toward the input cone (15) .

4. The friction clutch (10b) of claim 1, wherein the input cone (15b) includes a third input cone (44b) which frictionally engages with an opposite surface to a surface of the output cone (24b) with which the input cone (15b) frictionally engages;
wherein the hub (22b) interlocks with the output cone (24b) and is connected with a second output cone (46b) which frictionally engages with an opposite surface to the surface of the third input cone (44b) with which the output cone (24b) frictionally engages.

5. The friction clutch (10b) of claim 1 or 2, wherein the hub (22b) includes a flexible portion (28b) which is elastically deformed by being pressed by the second output cone (46b) when the second output cone (46b) moves toward the input cone (15b).

## Patentansprüche

1. Eine Reibkupplung (10), aufweisend:
eine zylindrische Kupplungsglocke (12), die drehbar mit einer Innenumfangsflächenrille (14) versehen ist,
eine Nabe (22), die koaxial mit der Kupplungsglocke (12, 12a, 12b) ist und an einer Innenumfangsseite der Kupplungsglocke (12) derart vorgesehen ist, dass sie relativ gedreht werden kann,
eine Druckplatte (16) und eine angetriebene Platte (18), die jeweils in die Innenumfangsflächenrille (14) gepasst sind,
einen Eingangskegel (15), der an der Kupplungsglocke (12) vorgesehen ist,
einen elastischen Körper (20), der zwischen der angetriebenen Platte (18) und dem Eingangskegel (15) angeordnet ist,
einen Kolben (32) der an einer Innenumfangsseite der Kupplungsglocke (12) vorgesehen ist, um sich nach vorne und nach hinten in einer Axialrichtung zu bewegen und die Druckplatte (16) zu der angetriebenen Platte (18) zu drücken,
einen Ausgangskegel (24), der mit der Nabe (22) verbunden ist, und
eine Reibplatte (26), die an dem Ausgangskegel (24) montiert ist und zwischen der Druckplatte (16) und der angetriebenen Platte (18) angeordnet ist,
**dadurch gekennzeichnet, dass** die Druckplatte (16), die angetriebene Platte (18) und der Eingangskegel (15) in dieser Reihenfolge in der Axialrichtung angeordnet sind,
wobei die Druckplatte (16), die Reibplatte (26) und die angetriebene Platte (18) reibend miteinander eingreifen und der elastische Körper (20) komprimiert wird, wenn sich der Kolben (32) zu der Druckplatte (16) bewegt, um die Druckplatte (16) zu drücken, und
der Eingangskegel (15) und der Ausgangskegel (24) reibend miteinander eingreifen, wenn sich der Kolben (32) weiter zu der Druckplatte (16) bewegt, sodass sich der Ausgangskegel (24) zu dem Eingangskegel (15) bewegt.

2. Reibkupplung (10) nach Anspruch 1, die weiterhin einen zweiten Eingangskegel (42) aufweist, der in die Innenumfangsflächenrille (14) gepasst ist und reibend mit einer zu einer Fläche des Ausgangskegels (24), mit welcher der Eingangskegel (15) reibend eingreift, gegenüberliegenden Fläche eingreift.

3. Reibkupplung (10) nach Anspruch 1 oder 2, wobei die Nabe (22) einen flexiblen Teil (28) umfasst, der elastisch verformt wird, indem er durch den Ausgangskegel (24) gedrückt wird, wenn sich der Ausgangskegel (24) zu dem Eingangskegel (15) bewegt.

4. Reibkupplung (10b) nach Anspruch 1, wobei der Eingangskegel (15b) einen dritten Eingangskegel (44b) umfasst, der reibend mit einer zu einer Fläche des Ausgangskegels (24b), mit welcher der Eingangskegel (15b) reibend eingreift, gegenüberliegenden Fläche eingreift,
wobei die Nabe (22b) mit dem Ausgangskegel (24b) verzahnt ist und mit einem zweiten Ausgangskegel (46b) verbunden ist, der reibend mit einer zu einer Fläche des dritten Eingangskegels (44b), mit welcher der Ausgangskegel (24b) reibend eingreift, gegenüberliegenden Fläche eingreift.

5. Reibkupplung (10b) nach Anspruch 1 oder 2, wobei die Nabe (22b) einen flexiblen Teil (28b) umfasst, der elastisch verformt wird, indem er durch den zweiten Ausgangskegel (46b) gedrückt wird, wenn sich der zweite Ausgangskegel (46b) zu dem Eingangskegel (15b) bewegt.

## Revendications

1. Embrayage à friction (10) comprenant :
un tambour d'embrayage cylindrique (12) qui est muni de manière rotative d'une cannelure de surface périphérique interne (14) ;
un moyeu (22) qui est coaxial avec le tambour d'embrayage (12, 12a, 12b) et est prévu sur un côté périphérique interne du tambour d'embrayage (12) de manière à pouvoir tourner relativement ;
une plaque de poussée (16) et une plaque menée (18) qui sont ajustées dans la cannelure de surface périphérique intérieure (14) respectivement ;
un cône d'entrée (15) qui est prévu sur le tambour d'embrayage (12) ;
un corps élastique (20) qui est situé entre la plaque menée (18) et le cône d'entrée (15) ;
un piston (32) qui est prévu sur un côté périphérique interne du tambour d'embrayage (12) pour se déplacer vers l'avant et vers l'arrière dans une direction axiale et pour presser la plaque de poussée (16) vers la plaque menée (18) ;
un cône de sortie (24) qui est relié au moyeu (22) ; et
une plaque de friction (26) qui est assemblé avec le cône de sortie (24) et disposé entre la plaque de poussée (16) et la plaque menée (18);
**caractérisé en ce que** la plaque de poussée (16), la plaque menée (18) et le cône d'entrée (15) sont agencés dans ledit ordre dans la direction axiale;
la plaque de poussée (16), la plaque de friction (26) et la plaque menée (18) sont amenées en contact par friction l'une avec l'autre et le corps élastique (20) est comprimé lorsque le piston (32) se déplace vers la plaque de poussée (16) pour appuyer sur la plaque de poussée (16) ; et
le cône d'entrée (15) et le cône de sortie (24) sont en prise l'un avec l'autre par frottement lorsque le piston (32) se déplace davantage vers la plaque de poussée (16) de sorte que le cône de sortie (24) se déplace vers le cône d'entrée (15).

2. Embrayage à friction (10) selon la revendication 1, comprenant en outre un deuxième cône d'entrée (42) qui est ajusté dans la cannelure de surface périphérique interne (14) et se met en prise par frottement avec une surface opposée à une surface du cône de sortie (24) avec lequel le cône d'entrée (15) se met en prise par friction.

3. Embrayage à friction (10) selon la revendication 1 ou 2, dans lequel le moyeu (22) comprend une partie flexible (28) qui se déforme élastiquement en étant pressée par le cône de sortie (24) lorsque le cône de sortie (24) se déplace vers le cône d'entrée (15).

4. Embrayage à friction (10b) selon la revendication 1, dans lequel le cône d'entrée (15b) comprend un troisième cône d'entrée (44b) qui se met en prise par frottement avec une surface opposée à une surface du cône de sortie (24b) avec laquelle le cône d'entrée (15b) se met en prise par friction ;
dans lequel le moyeu (22b) s'emboîte avec le cône de sortie (24b) et est relié à un deuxième cône de sortie (46b) qui se met en prise par frottement avec une surface opposée à la surface du troisième cône d'entrée (44b) avec laquelle le cône de sortie (24b ) se met en prise par friction.

5. Embrayage à friction (10b) selon la revendication 1 ou 2, dans lequel le moyeu (22b) comporte une portion flexible (28b) qui se déforme élastiquement en étant pressée par le deuxième cône de sortie (46b) lorsque le deuxième cône de sortie (46b) se déplace vers le cône d'entrée (15b).
